# EUROPEAN PATENT SPECIFICATION

(11) **EP 2 868 451 B1**
(45) Date of publication and mention of the grant of the patent: **08.08.2018**
(21) Application number: 13810719.8
(22) Date of filing: 26.06.2013
(51) Int. Cl.: B29B 7/46, B29C 47/40, B29C 47/60, B29C 47/66, B29C 47/08

(54) **TWIN SCREW EXTRUDER**
DOPPELSCHNECKENEXTRUDER
EXTRUDEUSE À DOUBLE VIS

(30) Priority: 29.06.2012 JP 2012146790
(43) Date of publication of application: 06.05.2015
(73) Proprietor: The Japan Steel Works, Ltd., Tokyo 141-0032 (JP)
(72) Inventor: TAKAMOTO, Seiji, Hiroshima-shi Hiroshima 736-8602 (JP); ISHIKAWA, Makoto, Hiroshima-shi Hiroshima 736-8602 (JP); FUJITA, Reo, Hiroshima-shi Hiroshima 736-8602 (JP); KAKIZAKI, Jun, Hiroshima-shi Hiroshima 736-8602 (JP)
(74) Representative: Plougmann Vingtoft a/s
(86) International application number: PCT/JP2013/067479
(87) International publication number: WO 2014/003045

(56) References cited:
- EP-A1- 1 902 824
- EP-A1- 2 239 122
- EP-A2- 0 391 003
- JP-A- H0 811 189
- JP-A- H04 257 414
- JP-A- S56 158 135
- JP-A- 2000 309 017
- JP-A- 2004 017 417
- US-A- 5 672 005
- US-A- 5 962 036
- US-A1- 2007 237 022

## Description

### Technical Field

The present invention relates to twin screw extruders in which two screws are rotated in a cylinder.

### Background Art

Pellet producing devices that produce pellets from resin material are known. Such pellet producing devices use a twin screw extruder that kneads resin material in a strand shape and extrudes the stranded resin material to a pellet machining unit (for example, refer to Patent Literature 1).

Such twin screw extruders include one having a structure in which two screws come into contact with each other while they rotate in the same direction.

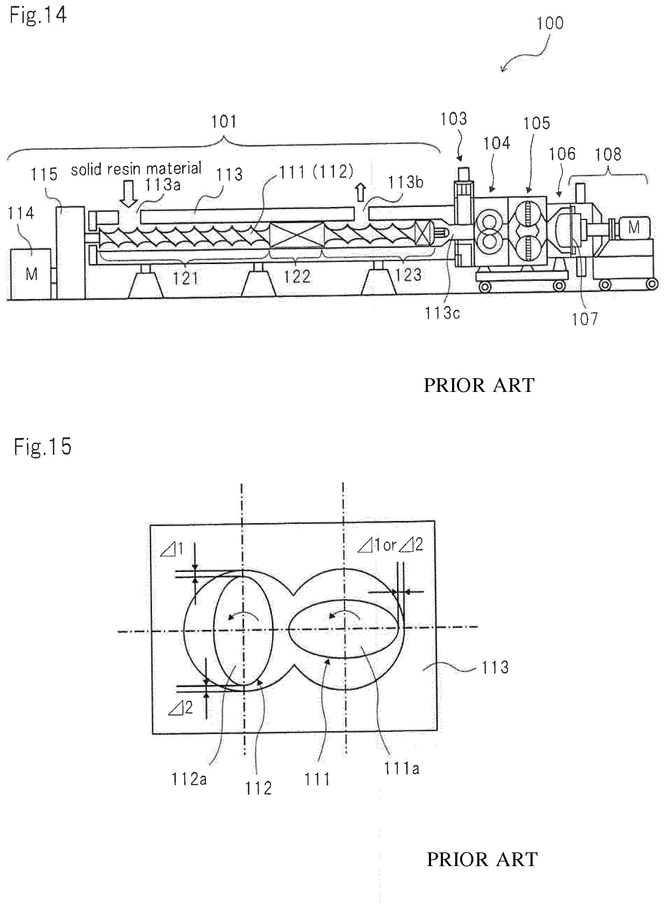

Fig. 14 is a schematic diagram showing a sectional view of a pellet producing device which has a twin screw extruder according to the related art of the present invention. As shown in Fig. 14, pellet producing device 100 has twin screw extruder 101, diverter valve 103, gear pump 104, filtration unit 105, die holder 106, dies 107, and pellet machining unit 108 that are located along the transporting direction of resin material.

Twin screw extruder 101 according to the related art of the present invention has first screw 111 and second screw 112 that come into contact with each other while they rotate in the same direction; and has cylinder 113 in which first screw 111 and second screw 112 are located; and has motor 114 and speed reducer 115 that rotary drive first screw 111 and second screw 112.

Cylinder 113 is formed in a cylindrical shape and has the same cross section in the axial direction of cylinder 113, where the resin material is transported. Cylinder 113 has inlet 113a to which the resin material is fed; and has vent 113b that vents inner gas from cylinder 113; and has outlet 113c from which the resin material kneaded by first screw 111 and second screw 112 is discharged.

To allow first screw 111 and second screw 112, which are disposed in cylinder 113 to rotate, a predetermined clearance is formed between the inner surface of cylinder 113 and the flight tips of each of first screw 111 and second screw 112.

First screw 111 and second screw 112 each have upstream transporting portion 121, plasticization-kneading section 122 with a kneading disc; and downstream transporting portion 123. One end of each of first screw 111 and second screw 112 is connected to speed reducer 115.

In pellet producing device 100 having the foregoing structure, solid resin material is fed from inlet 113a of cylinder 113. A barrel that can heat and cool its contents applies heat energy to the resin material. In addition, first screw 111 and second screw 112 rotated by motor 114 and speed reducer 115 apply shear energy to the resin material. Thus, the resin material is plasticized and molten. The molten resin material is transported to outlet 113c by first screw 111 and second screw 112 that are rotated.

The resin material, which is extruded from outlet 113c of cylinder 113, is successively transported in order of gear pump 104, filtration unit 105 and die holder 106. Thereafter, the resin material is extruded in a strand shape from dies 107. The resin material that is extruded from dies 107 is cut in water by using a cutter of pellet machining unit 108 and then the extruded resin material that has been cut is formed into a pellet shape.

Generally, in the twin screw extruder according to the related art of the present invention, a predetermined clearance is formed between the flight tip of each of the two screws that rotate and the inner surface of the cylinder.

Fig. 15 shows a schematic diagram illustrating the clearance between each of two screws and a cylinder of another twin screw extruder according to the related art of the present invention. As shown in Fig. 15, when a double flighted screw is used, clearance Δ1 between flight tip 111a of first screw 111 and the inner surface of cylinder 113, may differ from clearance Δ2 between flight tip 112a of second screw 112 and the inner surface of cylinder 113.
Patent Literature 1: JP2000-309017A, Publication Furthermore, US 5 962 036 discloses a twin screw extruder having a stator member coupled with the extruder barrel. The stator includes a plurality of injection ports for directing an edible lubricant, such as liquid fat, into the bearing assembly during operation of extruder. Further reference is made to EP 2 239 122 A1.

### Summary of the Invention

In the twin screw extruder according to the foregoing related art, the flight tips of screws come into contact with each other while they rotate. As a result, external forces (hereinafter referred to as side forces) that act outward in the radial direction of the screws occur at the flight tips depending on how the flight tips come into contact with each other.

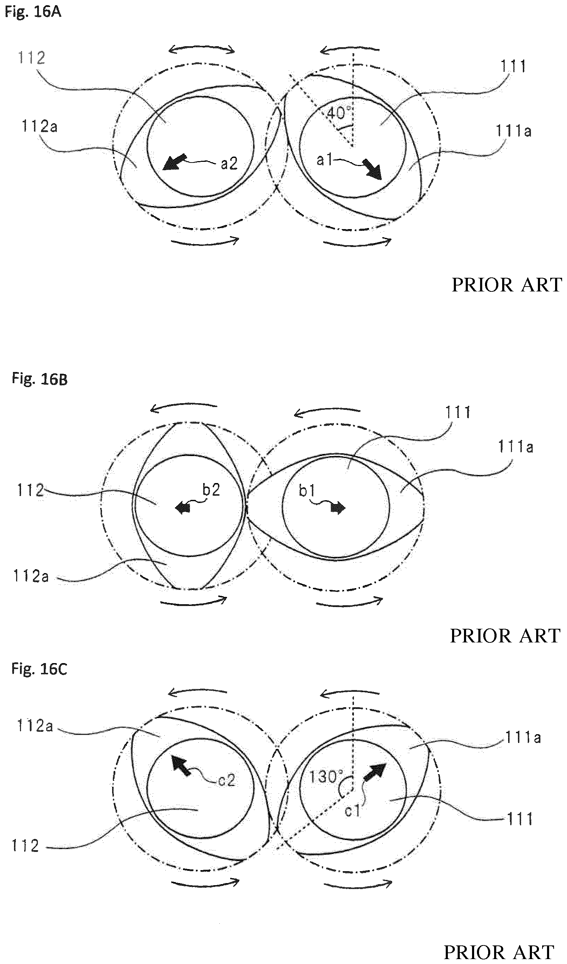

Figs. 16A to 16C are schematic diagrams describing how forces that act outward in the radial direction between the two screws of the twin screw extruder according to the related art of the present invention occur. Figs. 16A to 16C show how the flight tips of the two screws that rotate in the same direction, counterclockwise, change.

As shown in Fig. 16A, flight tip 111a of first screw 111 and flight tip 112a of second screw 112 come into contact with each other at an upper position on the horizontal plane (hereinafter referred to as the horizontal plane) that passes through the axial lines of screws 111 and 112. At this point, the side forces that occur in the directions of arrows a1 and a2 at flight tip 111a of first screw 111 and flight tip 112a of second screw 112 become the maximum.

The side forces shown in Figs. 16A to 16C include twisting that occur around the axes of screws 111 and 112, and represent the sums of forces that occur in the axial directions of screws 111 and 112. The side forces shown in Figs. 16A to 16C do not represent the positions in the axial directions; they represent the orientations in the radial directions of screws 111 and 112.

Based on the rotation angle of first screw 111, assuming that the rotation angle of flight tip 111a is a 0 degree angle when the longer diameter direction of the rotation angle of flight tip 111a is in parallel with the vertical direction, when the rotation angle of flight tip 111a changes to a 40 degree angle, it comes into contact with flight tip 112a of second screw 112 at an upper position on the horizontal plane.

Thereafter, as shown in Fig. 16B, as two screws 111 and 112 rotate, flight tips 111a and 112a rotate and thereby side forces occur in the directions of arrows b1 and b2 in parallel with the horizontal plane.

When two screws 111 and 112 rotate further than the state shown in Fig. 16B, as shown in Fig. 16C, flight tip 111a of first screw 111 comes into contact with flight tip 112a of second screw 112 at a lower position on the horizontal plane. Based on the rotation angle of first screw 111, when the rotation angle of flight tip 111a becomes 130 degree angle, flight tip 111a of first screw 111 comes into contact with flight tip 112a of second screw 112. At this point, the side forces that occur in the directions of arrows c1 and c2 at flight tip 111a and flight tip 112a reach the maximum value.

Thereafter, when flight tip 111a of first screw 111 and flight tip 112a of second screw 112 rotate by 90 degree angle from the state shown in Fig. 16C, two screws 111 and 112 enter the same state as shown in Fig. 16A. Thus, while two screws 111 and 112 rotate by one turn, namely 360 degree angle, the state, in which the side forces that occur in flight tip 111a and flight tip 112a become the maximum value at the upper position shown in Fig. 16A and the lower position shown in Fig. 15C one after the other, and the state occurs a total of four times.

As described above, when the side forces that occur at flight tip 111a of first screw 111 and flight tip 112a of second screw 112 reach the maximum value, the side forces cause screws 111 and 112 to bend outward in the radial directions with respect to the axial lines of screws 111 and 112. Thus, deflection occurs in screws 111 and 112.

When deflection occurs in screws 111 and 112, flight tip 111a of screw 111 and flight tip 112a of second screw 112 come into contact with the inner surface of the cylinder. Thus, there is a problem in which flight tips 111a and 112a wear out.

According to the related art, in the screws supported by the speed reducer at their one end, the foregoing side forces, the weights of the screws itself, and the centrifugal forces caused by the rotations of the screws, cause the other end of each of the screws on the discharging side that is the downstream in the axial direction of the plasticization-kneading section that acts as the point where force is applied, to be largely bent. Thus, the flight tip at the end of the discharging side of each of the screws and the inner surface of the cylinder, tend to come into contact with each other and thereby the flight tips of the screws will wear out. The amount of wearing-out of the screws on the downstream in the axial direction tends to become greater than the amount of wearing-out that occurs in the plasticization-kneading section that acts as the point at which force is applied.

Even in the structure in which two rotating screws do not come into contact with each other, since two screws rotate as in the operations shown in Figs. 16A to 16C, resin material, which is sandwiched between the two screws, causes force, which is similar to the foregoing side forces, to occur. This force that depends on the amount and viscosity of resin material, which is sandwiched between the flight tips of the screws, is less than the foregoing side forces, but causes deflection in the screws. Thus, regardless of the structure in which the two screws rotate without coming into contact with each other or regardless of the amount of engagement of the flight tips of the two screws, the screws bend and thereby the flight tips wear out.

As the screws wear out, the clearance, that is formed therebetween, becomes large. Thus, the extruding force for resin material weakens and thereby the axial length of the molten resin material filled in the spatial volume between each of the screws and the cylinder becomes large. The increase of the axial length of the molten resin material causes the resin material that was filled into the spatial volume formed between each of the screws and the cylinder to be repeatedly kneaded, heated, and deteriorated as the screws rotate. If the length of the resin material that has been loaded extends to the position of the vent, the resin material overflows from the vent and thereby the desired production amount may not be obtained.

Therefore, the object of the present invention is to provide twin screw extruders that can solve the foregoing problems of the related art, and to provide twin screw extruders according to independent claims 1 to 3 that allow a screw supporting portion to support screws and decrease wearing-out of the screws.

### Brief Description of Drawings

Fig. 1 shows a schematic diagram illustrating a sectional view of a twin screw extruder according to an embodiment of the present invention.
Fig. 2 shows a schematic diagram illustrating a first screw supporting portion and a second screw supporting portion according to the embodiment.
Fig. 3 shows a schematic diagram describing a first supporting surface and a second supporting surface of the first supporting portion and the second supporting portion according to the embodiment.
Fig. 4 shows a schematic diagram describing another example of the structure of the screw supporting portions according to the embodiment.
Fig. 5 shows a schematic diagram illustrating another example of the structure of the second screw supporting portion according to the embodiment.
Fig. 6 shows a schematic diagram illustrating another example of the structure of the first and second supporting surfaces of the second screw supporting portion according to the embodiment.
Fig. 7 shows a schematic diagram illustrating another example of the structure of the first and second supporting surfaces of the second screw supporting portion according to the embodiment.
Fig. 8A shows a schematic diagram illustrating a plan view of a small diameter portion of the first screw and a small diameter portion of the second screw according to the embodiment.
Fig. 8B shows a schematic diagram illustrating a sectional view of the small diameter portion of the first screw and the small diameter portion of the second screw according to the embodiment.
Fig. 9A shows a schematic diagram illustrating a plan view of another example of the structure of the small diameter portion of the first screw and the small diameter portion of the second screw according to the embodiment.
Fig. 9B shows a schematic diagram illustrating a sectional view of another example of the structure of the small diameter portion of the first screw and the small diameter portion of the second screw according to the embodiment.
Fig. 10A shows a schematic diagram illustrating a plan view of another example of the structure of the small diameter portion of the first screw and the small diameter portion of the second screw according to the embodiment.
Fig. 10B shows a schematic diagram illustrating a sectional view of another example of the structure of the small diameter portion of the first screw and the small diameter portion of the second screw according to the embodiment.
Fig. 11A shows a schematic diagram illustrating a plan view of another example of the structure of the small diameter portion of the first screw and the small diameter portion of the second screw according to the embodiment.
Fig. 11B shows a schematic diagram illustrating a sectional view of another example of the structure of the small diameter portion of the first screw and the small diameter portion of the second screw according to the embodiment.
Fig. 12 shows a schematic diagram describing the relationship of the ratio of total (L/D) and (FV/A) with respect to the structure of the embodiment.
Fig. 13 shows a schematic diagram describing a first supporting surface that supports the first screw and a second supporting surface that supports the second screw of the screw supporting portions according to the embodiment.
Fig. 14 shows a schematic diagram illustrating a sectional view of a pellet producing device having a twin screw extruder according to the related art of the present invention.
Fig. 15 shows a schematic diagram illustrating a clearance between each of screws and a cylinder of the twin screw extruder according to the related art of the present invention.
Fig. 16A shows a schematic diagram describing that force acting outward in the radial direction between two screws of the twin screw extruder according to the related art of the present invention occurs.
Fig. 16B shows a schematic diagram describing that force acting outward in the radial direction between two screws of the twin screw extruder according to the related art of the present invention occurs.
Fig. 16C shows a schematic diagram describing that force acting outward in the radial direction between two screws of the twin screw extruder according to the related art of the present invention occurs.

### Description of Embodiments

Next, with reference to the accompanying drawings, an embodiment of the present invention will be described.

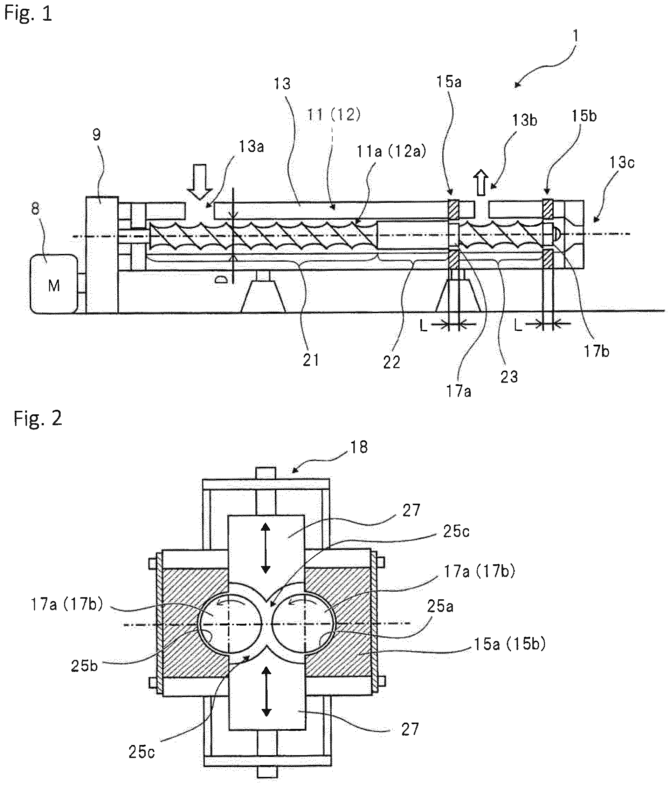

Fig. 1 is a schematic diagram showing a sectional view of a twin screw extruder according to the embodiment.

As shown in Fig. 1, twin screw extruder 1 according to this embodiment has first screw 11 and second screw 12 that rotate in the same direction; cylinder 13 in which first screw 11 and second screw 12 are located and to which resin material is supplied; and first screw supporting portion 15a and second screw supporting portion 15b that rotatably support first screw 11 and second screw 12.

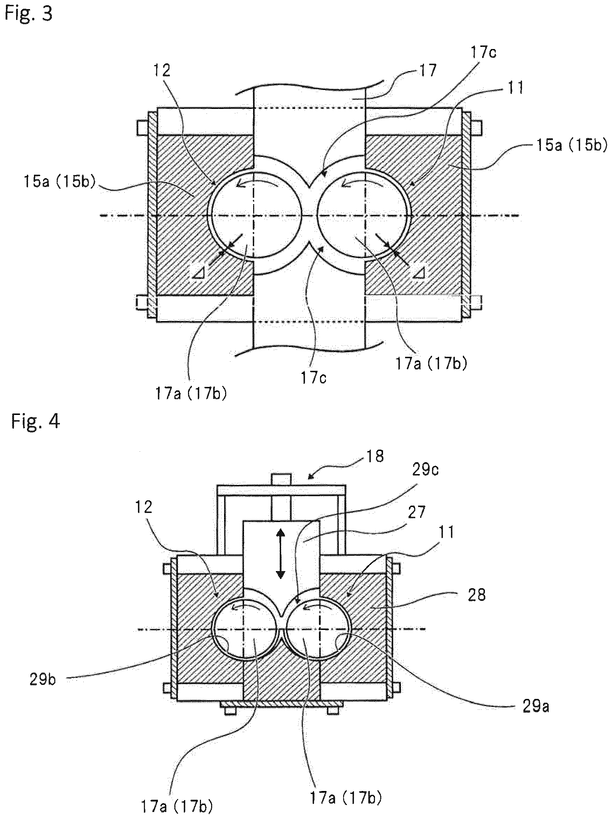

Fig. 2 shows a schematic diagram illustrating the first and second screw supporting portions according to the embodiment. Fig. 3 shows a schematic diagram describing first and second supporting surfaces of the first and second screw supporting portions according to the embodiment.

As shown in Fig. 2, gate plates 27 are located adjacent to first screw supporting portion 15a and second screw supporting portion 15b. Gate plates 27 adjust the flow rates of resin material transported to the discharging side through first screw supporting portion 15a and second screw supporting portion 15b.

Gate plates 27 are supported by plate supporting mechanism 18 such that gate plates 27 are vertically movable. When gate plates 27 are moved by a plate moving mechanism (not shown), the sizes of the flow paths of screw supporting portions 15a and 15b can be adjusted.

First screw 11 has flight tip 11a. Likewise, second screw 12 has flight tip 12a. As shown in Fig. 1, one end of first screw 11 and one end of second screw 12 are connected to speed reducer 9 to which the drive force of motor 8 is transmitted. Motor 8 and speed reducer 9 cause first screw 11 and second screw 12 to rotate in the same direction and flight tips 11a and 12a to come into contact with each other. At this point, first screw 11 and second screw 12 rotate while they sandwich resin material between flight tips 11a and 12a.

First screw 11 and second screw 12 have the same structure. They have upstream transporting section 21 that transports powder resin material; plasticization-kneading section 22 that plasticizes and kneads the resin material; and downstream transporting section 23 that transports molten resin material. These sections are successively located in the axial direction of each of first screw 11 and second screw 12.

First screw 11 and second screw 12 each have first small diameter portion 17a. The axial position of first small diameter portion 17a of first screw 11 is the same as that of second screw 12. First small diameter portion 17a is formed in a cylindrical shape and has a diameter smaller than that of flight tips 11a and 12a. Likewise, first screw 11 and second screw 12 each have second small diameter portion 17b. The axial position of second small diameter portion 17b of first screw 11 is the same as that of second screw 12. Second small diameter portion 17b is formed in a cylindrical shape and has a diameter smaller than that of flight tip 11a and flight tip 12a.

The outer peripheral surfaces of first small diameter portion 17a and second small diameter portion 17b may be made of metal material which has higher wear-out resistance than that of flight tip 11a of first screw 11 and flight tip 12a of second screw 12 so as to improve the durability of small diameter portions 17a and 17b.

Cylinder 13 is formed in a cylindrical shape and has the same cross section in the axial direction, where resin material is transported. As shown in Fig. 1, cylinder 13 has inlet 13a to which powder resin material is fed; and has vent 13b that vents gas that occurs in cylinder 13; and has outlet 13c from which resin material, that is kneaded by first screw 11 and second screw 12, is discharged.

Moreover, a predetermine clearance is formed between the inner surface of cylinder 13 and each of first screw 11 and second screw 12 such that first screw 11 and second screw 12 located in cylinder 13 can rotate.

First screw supporting portion 15a is located on the downstream in the transporting direction (flow direction) of resin material and adjacent to plasticization-kneading section 22. Second screw supporting portion 15b is located on the downstream in the transporting direction of resin material and is adjacent to the end of the outlet 13c side of first screw 11 and the end of the outlet 13c side of second screw 12.

First screw supporting portion 15a has first supporting surface 25a that rotatably supports first small diameter portion 17a of first screw 11; second supporting surface 25b that rotatably supports first small diameter portion 17a of second screw 12; and flow path 25c that allows resin material, which is transported by first screw 11 and second screw 12, to pass.

Likewise, second screw supporting portion 15b has first supporting surface 25a that rotatably supports second small diameter portion 17b of first screw 11; second supporting surface 25b that rotatably supports second small diameter portion 17b of second screw 12; and flow path 25c that allows resin material, which is transported by first screw 11 and second screw 12, to pass.

Clearance Δ, which is formed between first supporting surface 25a of first screw supporting portion 15a and first small diameter portion 17a of first screw 11 and clearance Δ, which is formed between second supporting surface 25b of first screw supporting portion 15a and first small diameter portion 17a of second screw 12, are set to be less than the clearance, which is formed between flight tip 11a of first screw 11 and the inner surface of cylinder 13, and the clearance, which is formed between flight tip 12a of second screw 12 and the inner surface of cylinder 13.

Likewise, clearance Δ, which is formed between first supporting surface 25a of second screw supporting portion 15b and second small diameter portion 17b of first screw 11 and clearance Δ, which is formed between second supporting surface 25b of second screw supporting portion 15b and second small diameter portion 17b of second screw 12, are set to be less than the clearance, which is formed between flight tip 11a of first screw 11 and the inner surface of cylinder 13, and the clearance, which is formed between flight tip 12a of second screw 12 and the inner surface of cylinder 13, respectively.

In first screw supporting portion 15a and second screw supporting portion 15b, since clearance Δ which is formed between first supporting surface 25a and first small diameter portion 17a, since clearance Δ which is formed between first supporting surface 25a and second small diameter portion 17b, since clearance Δ which is formed between second supporting surface 25b and first small diameter portion 17a, and since clearance Δ which is formed between second supporting surface 25b and second small diameter portion 17b, are small, even if side forces that occur in plasticization-kneading section 22 cause first screw 11 and second screw 12 to bend, flight tip 11a of first screw 11 and flight tip 12a of second screw 12 will have less contact with the inner surface of cylinder 13. As a result, flight tip 11a of first screw 11 and flight tip 12a of second screw 12 can be prevented from wearing out. Thus, molten resin material can be smoothly extruded free from deterioration.

The wearing-out of each screw can be generally indexed by (FV/A) where F is side force (kgf), V is the peripheral speed of the flight tip of each screw (m/s), and A is the area of the flight tip of each screw (cm²).

If the inner diameter of the cylinder and the outer diameter of each screw are decreased, peripheral speed V can be decreased. If cylindrical screws are used, although their outer diameters become small, the area at which each screw comes into contact with the inner surface of the cylinder can be increased. In such a method, the value of (FV/A) can be decreased.

According to the embodiment, since the screws each have the first and second screw supporting portions, the force that acts on one screw supporting portion that supports the screws can be decreased. In addition, according to the embodiment, a plurality of screw supporting portions supports the screws at a plurality of their axial positions. As a result, since deflection that occurs in the screws is distributed to the screw supporting portions, the amount of deflection that occurs in the screws can be decreased.

The screw supporting portions of first screw 11 and second screw 12 are located on the downstream of plasticization-kneading section 22 with respect to the transporting direction of resin material. Although first screw 11 and second screw 12 largely bend at the downstream side, since the screw supporting portions support them at the downstream side of plasticization-kneading section 22, deflection of the screws can be remarkably decreased.

In Fig. 3, first supporting surface 25a and second supporting surface 25b is formed so as to support 1/2 of the entire circumference of each of small diameter portions 17a and 17b.

First supporting surface 25a supports each of small diameter portions 17a and 17b in the range of a 180 degree angle to a 360 degree angle in the counterclockwise rotation angle based on the top of the peripheral surface of each of small diameter portions 17a and 17b. Likewise, second supporting surface 25b supports each of small diameter portions 17a and 17b in the range of a 0 degree angle to a 180 degree angle in the clockwise rotation angle based on the top of the peripheral surface of each of small diameter portions 17a and 17b.

Flow path 25c is formed of the upper space and the lower space of small diameter portion 17a (17b) in screw supporting portion 15a (15b). A pair of gate plates 27 are located at the upper and lower positions of screw supporting portion 15a (15b) such that gate plates 27 are movable in the vertical direction in the state of sandwiching first screw 11 and second screw 12. Gate plates 27 each have an arc cut portion corresponding to the diameter of small diameter portion 17a (17b). When the pair of gate plates 27 vertically move against small diameter portion 17a (17b), flow path 25c is open or closed. When flow path 25c is open or closed, the flow rate of resin material is adjusted.

As described above, since the structure of first screw supporting portion 15a is the same as that of second screw supporting portion 15b, if they are simply referred to as screw supporting portion 15, screw supporting portion 15 refers to both first screw supporting portion 15a and second screw supporting portion 15b. Likewise, since the structure of first small diameter portion 17a of each of first screw 11 and second screw 12 is the same as that of second small diameter portion 17b of each of first screw 11 and second screw 12, small diameter portion 17 refers to both first small diameter portion 17a and second small diameter portion 17b.

Although the pair of gate plates 27 are located at the upper and lower positions of each of the foregoing first and second screw supporting portions, the gate plate may be located only at the lower position of each of the screw supporting portions.

Fig. 4 shows a schematic diagram describing another example of the structure of the screw supporting portion according to the embodiment. As shown in Fig. 4, screw supporting portion 28 has first supporting surface 29a that rotatably supports first screw 11; second supporting surface 29b that rotatably supports second screw 12; and flow path 29 that allows resin material, which is transported by first screw 11 and second screw 12, to pass.

Each of first supporting surface 29a and second supporting surface 29b supports nearly 3/4 of the entire periphery of small diameter portion 17a (17b). First supporting surface 29a and second supporting surface 29b are successively formed between small diameter portion 17a (17b) of first screw 11 and small diameter portion 17a (17b) of second screw 12 at the lower position of screw supporting portion 28.

First supporting surface 29a supports each of small diameter portions 17a and 17b in the range of a 90 degree angle to a 360 degree angle in the counterclockwise rotation angle based on the top of the peripheral surface of each of small diameter portions 17a and 17b. Likewise, second supporting surface 29b supports each of small diameter portions 17a and 17b in the range of a 0 degree angle to a 270 degree angle in the clockwise rotation angle based on the top of the peripheral surface of each of small diameter portions 17a and 17b.

Flow path 29c is formed of the upper space of small diameter portion 17a (17b) in screw supporting portion 28. Gate plate 27 is located at the upper position of screw supporting portion 28 such that gate plate 27 is movable in the vertical direction. Gate plate 27 has an arc cut portion corresponding to the diameter of small diameter portion 17a (17b). When gate plate 27 vertically moves against small diameter portion 17a (17b), flow path 29c is open or closed. When flow path 29c is open or closed, the flow rate of resin material is adjusted.

The structure of one of screw supporting portions 15 and 28 shown in Fig. 2 and Fig. 4 may be applied to either the first screw supporting portion or to the second screw supporting portion. Gate plates 27 are located adjacent to the foregoing first and second screw supporting portions. However, the gate plate may not be located adjacent to the second screw supporting portion. Next, with reference to the accompanying drawings, other examples of the structure of the second screw supporting portion will be described.

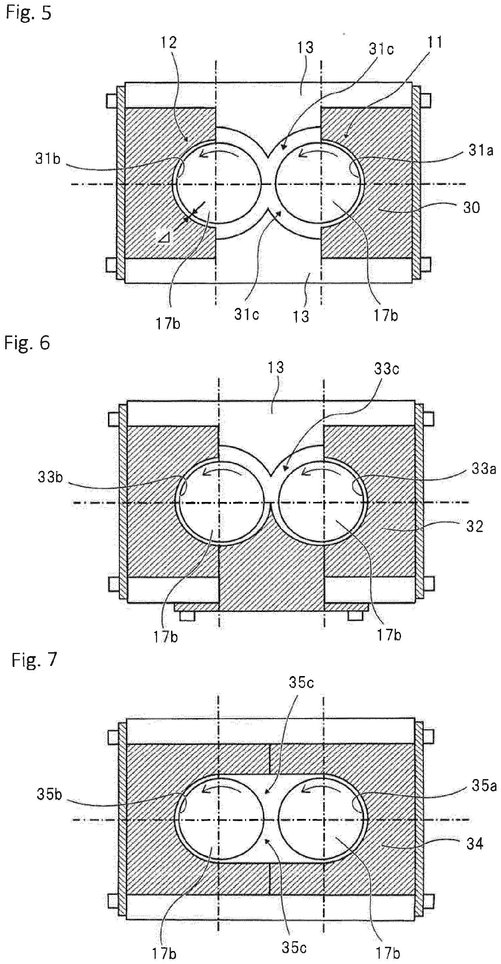

Fig. 5 shows a schematic diagram describing another example of the structure of the second screw supporting portion according to the embodiment. As shown in Fig. 5, second screw supporting portion 30 has first supporting surface 31a that rotatably supports first screw 11; second supporting surface 31b that rotatably supports second screw 12; and flow path 31c that allows resin material, which is transported by first screw 11 and second screw 12, to pass.

First supporting surface 31a and second supporting surface 31b support 1/2 of the entire periphery of small diameter portion 17b. First supporting surface 31a supports small diameter portion 17b in the range of a 180 degree angle to a 360 degree angle in the counterclockwise rotation angle based on the top of the peripheral surface of small diameter portion 17b. Likewise, second supporting surface 31b supports small diameter portion 17b in the range of a 0 degree angle to a 180 degree angle in the clockwise rotation angle based on the top of the peripheral surface of small diameter portion 17b. Flow path 31c is formed of the space between the inner surface of cylinder 13 located in second screw supporting portion 30 and small diameter portion 17b. Flow path 31c is formed above and below small diameter portion 17b.

Fig. 6 shows a schematic diagram illustrating another example of the structure of the second screw supporting portion of twin screw extruder 1 according to the embodiment. As shown in Fig. 6, second screw supporting portion 32 has: first supporting surface 33a that rotatably supports first screw 11; second supporting surface 33b that rotatably supports second screw 12; and flow path 33c that allows resin material, which is transported by first screw 11 and second screw 12, to pass.

Like screw supporting portion 28 shown in Fig. 4, each of first supporting surface 33a and second supporting surface 33b supports nearly 3/4 of the entire periphery of small diameter portions 17a, 17b. First supporting surface 33a and second supporting surface 33b are successively formed between small diameter portion 17b of first screw 11 and small diameter portion 17b of second screw 12 at the lower position of screw supporting portion 32.

First supporting surface 33a supports small diameter portion 17b in the range of a 90 degree angle to a 360 degree angle in the counterclockwise rotation angle based on the top of the peripheral surface of small diameter portion 17b. Likewise, second supporting surface 33b supports small diameter portion 17b in the range of a 0 degree angle to a 270 degree angle in the clockwise rotation angle based on the top of the peripheral surface of small diameter portion 17b.

Flow path 33c is formed of the space between the inner surface of cylinder 13 located in screw supporting portion 32 and each of small diameter portions 17b. Flow path 31c is formed above small diameter portions 17b.

Fig. 7 shows a schematic diagram illustrating another example of the structure of the second screw supporting portion of twin screw extruder 1 according to the embodiment. As shown in Fig. 7, second screw supporting portion 34 has first supporting surface 35a that rotatably supports first screw 11; second supporting surface 35b that rotatably supports second screw 12; and flow path 35c that allows resin material, which is transported by first screw 11 and second screw 12, to pass.

Each of first supporting surface 35a and second supporting surface 35b supports nearly 1/2 of the entire periphery of small diameter portion 17b. First supporting surface 35a supports small diameter portion 17b in the range of a 180 degree angle to a 360 degree angle in the counterclockwise rotation angle based on the top of the peripheral surface of small diameter portion 17b. Likewise, second supporting surface 35b supports small diameter portion 17b in the range of a 0 degree angle to a 180 degree angle in the clockwise rotation angle based on the top of the peripheral surface of small diameter portion 17b.

Second screw supporting portion 34 is formed of first supporting surface 35a and second supporting surface 35b through linear inner surfaces. As a result, although flow path 35c of second screw supporting portion 34 is smaller than flow path 25c shown in Fig. 3, the workability of the inner surfaces of second screw supporting portion 34 including first supporting surface 35a and second supporting surface 35b improves.

Flow path 35c is formed of the upper space and lower space between small diameter portions 17b in second screw supporting portion 34.

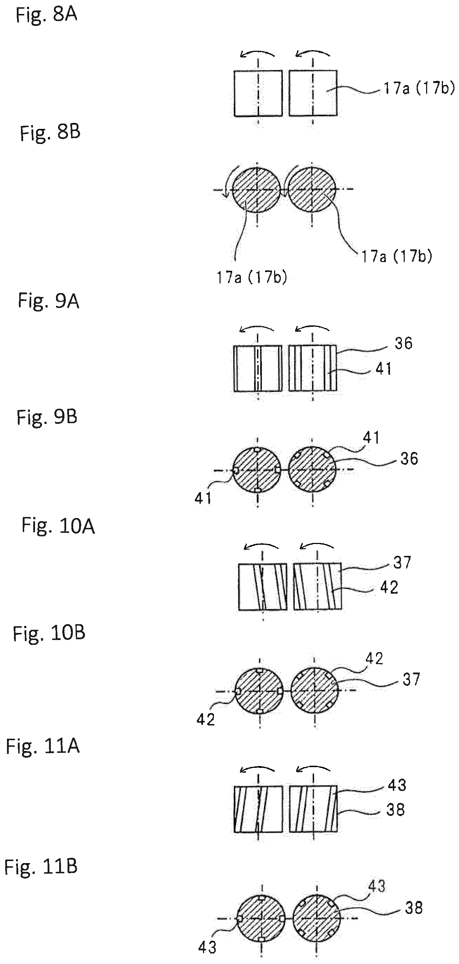

Figs. 8A and 8B show schematic diagrams describing small diameter portions 17a and 17b of first screw 11 and second screw 12 located in twin screw extruder 1 according to the embodiment. Fig. 8A shows a schematic diagram illustrating a plan view of small diameter portion 17, whereas Fig. 8B shows a schematic diagram illustrating a sectional view of small diameter portions 17a and 17b. Figs. 8A and 8B show that the first and second screws rotate in the counterclockwise direction as the arrow direction.

As shown in Figs. 8A and 8B, small diameter portions 17 of first screw 11 and second screw 12 are formed in a cylindrical shape and have a diameter smaller than that of flight tips 11a and 12a.

Next, the operations of first screw supporting portion 15a and second screw supporting portion 15b of twin screw extruder 1 having the foregoing structure will be described.

In twin screw extruder 1, resin material is supplied from inlet 13a of cylinder 13. In cylinder 13, first screw 11 and second screw 12 rotate. As a result, the resin material is transported from upstream transporting section 21 to plasticization-kneading section 22. The resin material kneaded in plasticization-kneading section 22 is transported by downstream transporting section 23 and then this resin material that has been kneaded is extruded from outlet 13c.

First supporting surface 25a and second supporting surface 25b of screw supporting portion 15 rotatably support small diameter portion 17 of first screw 11 and second screw 12 that come into contact with each other while they rotate. Side forces that occur between first screw 11 and second screw 12 cause the end of upstream transporting section 21 to act as the fulcrum and cause plasticization-kneading 22 to act as the point at which force is applied. Thus, the end of downstream transporting section 23 largely bends, first screw 11 and second screw 12 come into contact with the inner surface of cylinder 13, and first screw 11 and second screw 12 wear out. However, first supporting surface 25a and second supporting surface 25b of screw supporting portion 15 prevent such situations from occurring.

Next, with reference to the accompanying drawings, another example of the structure of the small diameter portions of first screw 11 and second screw 12 will be described.

Figs. 9A and 9B show schematic diagrams describing an example of the structure of small diameter portions of first screw 11 and second screw 12 located in twin screw extruder 1 according to the embodiment. Fig. 9A shows a schematic diagram illustrating a plan view of the small diameter portions, whereas Fig. 9B shows a schematic diagram illustrating a sectional view of the small diameter portions. Figs. 9A and 9B show that first screw 11 and second screw 12 rotate in the counterclockwise direction as the arrow direction. The small diameter portions according to this example may be applied to either the first small diameter portion or to the second small diameter portion.

As shown in Figs. 9A and 9B, small diameter portions 36 of first screw 11 and second screw 12 are formed in a cylindrical shape and have a diameter smaller than that of flight tips 11a and 12a. A plurality of grooves 41 are linearly formed on the peripheral surface of each of small diameter portions 36 in the axial direction thereof. The plurality of grooves 41 are formed at predetermined intervals in the peripheral direction of each of small diameter portions 36. Since the plurality of grooves 41 function as flow paths through which resin material flows, the fluidity of resin material on screw supporting portion 15 improves.

The predetermined number of grooves 41 formed at a predetermined pitch, with a predetermined width, and in a predetermined depth depends on the required fluidity of resin material on screw supporting portion 15.

Figs. 10A and 10B show schematic diagrams describing an example of the structure of small diameter portions of first screw 11 and second screw 12 located in twin screw extruder 1 according to the embodiment. Fig. 10A shows a schematic diagram illustrating a plan view of each of the small diameter portions, whereas Fig. 10B shows a schematic diagram illustrating a sectional view of each of the small diameter portions. Figs. 10A and 10B show that first screw 11 and second screw 12 rotate in the counterclockwise direction as the arrow direction.

The structure of grooves of the small diameter portions of this example differs from that of grooves 41 of small diameter portions 35 shown in Figs. 9A and 9B. Thus, only the grooves of the small diameter portions of this example will be described briefly.

As shown in Figs. 10A and 10B, a plurality of grooves 42 are helically formed on the peripheral surface of each of small diameter portion 37 of first screw 11 and second screw 12. The plurality of grooves 42 are formed at predetermined intervals in the peripheral direction of each of small diameter portions 37. The structure of grooves 42 formed on each of small diameter portions 37 differs from grooves 41 formed on each of small diameter portions 36 shown in Fig. 9 in that the longitudinal direction of grooves 42 is inclined to the axial direction at a predetermined inclination angle. Grooves 42 formed on each of small diameter portions 37 are twisted on the peripheral surface thereof in the same direction as the rotating direction of first screw 11 and second screw 12.

Figs. 11A and 11B show schematic diagrams illustrating another example of the structure of small diameter portions of first screw 11 and second screw 12 located in the twin screw extruder according to the embodiment. Fig. 11A shows a schematic diagram illustrating a plan view of each of the small diameter portions, whereas Fig. 11B shows a schematic diagram illustrating a sectional view of each of the small diameter portions.

As shown in Figs. 11A and 11B, a plurality of grooves 43 are helically formed on the peripheral surface of each of small diameter portions 38 of first screw 11 and second screw 12. The plurality of grooves 43 are located at predetermined intervals in the peripheral direction of each of small diameter portions 38. Like the example of the structure shown in Figs. 10A and 10B, the longitudinal direction of grooves 43 is inclined in the axial direction at a predetermined inclination angle. The orientation of the inclination of the longitudinal direction of grooves 43 to the axial direction of each of small diameter portions 38 differs from that of grooves 42 of each off small diameter portions 37 shown in Figs. 10A and 10B. Grooves 42 formed on each of small diameter portions 38 are twisted on the peripheral surface thereof in the opposite direction of the rotating direction of first screw 11 and second screw 12.

In order to increase the area supported by supporting surfaces 25a and 25b of screw supporting portion 15 and decrease deflection of first screw 11 and second screw 12 in each of the small diameter portions of the foregoing examples of the structure, the area of each of small diameter portions 36 shown in Figs. 9A and 9B is preferably greater than the area of each of small diameter portions 37 shown in Figs. 10A and 10B and the area of each of small diameter portions 38 shown in Figs. 11A and 11B. On the other hand, in order to improve the fluidity of resin material on screw supporting portion 15 in each of the small diameter portions of the foregoing examples of the structure, the fluidity of each of small diameter portions 38 shown in Figs. 11A and 11B is preferably greater than the fluidity of each of small diameter portions 36 shown in Figs. 9A and 9B, the fluidity of each of small diameter portions 36 being preferably greater than the fluidity of each of small diameter portions 37 shown in Figs. 10A and 10B.

Next, with respect to wearing-out of screws, the structure having screw supporting portion 15 that supports first screw 11 and second screw 12 according to the embodiment and the structure having no screw supporting portion according to the related art of the present invention will be compared.

To show the comparison, twin screw extruders (made by The Japan Steel Works Ltd.) having cylindrical screws with a diameter of 69 mm and small diameter portions with diameters of 44 mm to 55 mm were used. Wearing-out of screws was indexed based on the foregoing (FV/A). The higher (FV/A) of the screws, the quickly they wear out.

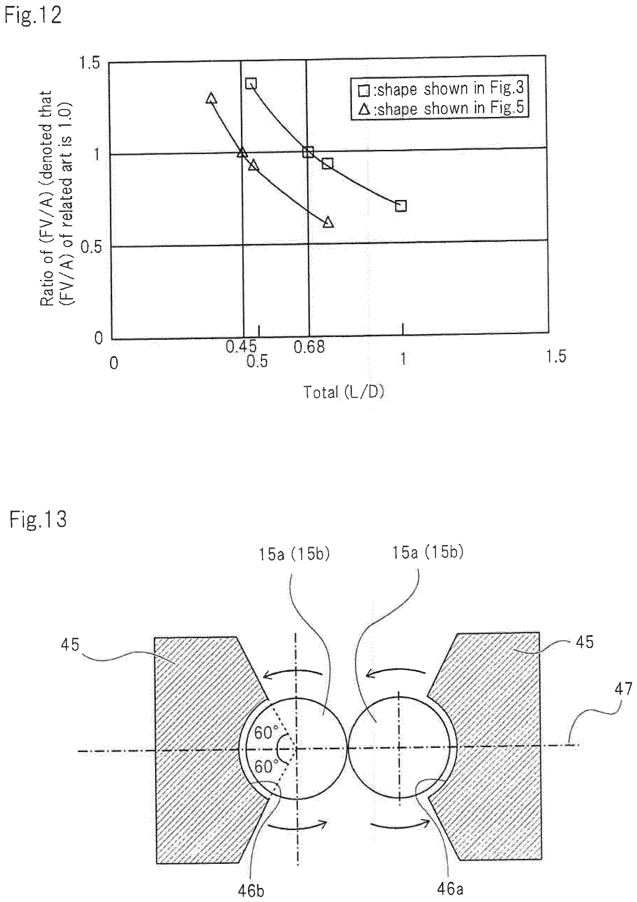

Fig. 12 is a schematic diagram describing the relationship between total (L/D) and (FV/A) of screw 11 (12) with respect to the structure in which screw supporting portion 15 supports first screw 11 and second screw 12 that each have small diameter portion 17. In Fig. 12, the horizontal axis represents total (L/D) of screw 11 (12), whereas the vertical axis represents the ratio of (FV/A) assuming that (FV/A) of the structure that does not have screw supporting portion 15 that supports small diameter portion 17 of screw 11 (12) according to the related art of the present invention is "1." Total (L/D) is the sum of (L/D) of each screw supporting portion that supports one screw 11 (12) where L is the length of small diameter portion 17 of each of first screw 11 and second screw 12 and D is the inner diameter of cylinder 13 opposite to the flight tip of screw 11 (12). In other words, total (L/D) is the sum of (L/D) of the first screw supporting portion and (L/D) of the second screw supporting portion.

In Fig. 12, the structure that uses screw supporting portion 15 having first supporting surface 25a and second supporting surface 25b shown in Fig. 2 and Fig. 3 is represented by using "□," whereas the structure that uses screw supporting portion 28 having first supporting surface 29a and second supporting surface 29b shown in Fig. 4 is represented by using "Δ."

As shown in Fig. 12, if screw supporting portion 15 is used and (FV/A) is set to less than "1", namely if total (L/D) is set to greater than 0.68, deflection of screws 11 and 12 can be decreased and thereby they can be prevented from wearing out. In contrast, if screw supporting portion 28 is used and if (FV/A) is set to less than "1", namely if total (L/D) is set to greater than 0.45, deflection of first screw 11 and second screw 12 can be decreased and thereby they can be prevented from wearing out.

From a point of view of the production of the twin screw extruder including machining of screws and cylinder, (L/D) of one screw supporting portion is preferably set to 3.5 or less.

The twin screw extruder according to the embodiment has first and second screw supporting portions. However, the number of screw supporting portions is not limited to two. When the twin screw extruder has at least one screw supporting portion, it prevents first screw 11 and second screw 12 from bending.

Last, the ranges of the first supporting surface and the second supporting surface formed on the screw supporting portion will be described.

Fig. 13 is a schematic diagram describing a first supporting surface that supports small diameter portion 17 of first screw 11 and a second supporting surface that supports small diameter portion 17 of second screw 12.

As shown in Fig. 13, first supporting surface 46a and second supporting surface 46b are formed on screw supporting portion 45 at least in the range that the angle of two equally inclined surfaces through horizontal plane 47, that passes through the centers of first supporting surface 46a and second supporting surface 46b, is a 120 degree angle.

When the ranges of first supporting surface 46a and second supporting surface 46b formed on screw supporting portion 45 are increased, the ranges that support small diameter portions 17 of first screw 11 and second screw 12, become large. As a result, the effect in which screw supporting portion 45 reduces deflection of first screw 11 and second screw 12 improves. On the other hand, from the point of view of the fluidity of resin material on screw supporting portion 45, the areas of first supporting surface 46a and second supporting surface 46b are preferably decreased so as to increase the flow path. Thus, the ranges of the individual supporting surfaces formed on the screw supporting portions and the shapes of the inner surfaces including the supporting surfaces need to be set from the point of view of preventing first screw 11 and second screw 12 from bending and of sufficiently improving the fluidity of resin material on the screw supporting portions.

As described above, twin screw extruder 1 according to the embodiment has first screw supporting portion 15a that supports first small diameter portions 17a of first screw 11 and second screw 12; and second screw supporting portion 15b that supports second small diameter portions 17b of first screw 11 and second screw 12. Thus, first screw supporting portion 15a and second screw supporting portion 15b support small diameter portion 17a of first screw 11 and small diameter portion 17b of second screw 12. As a result, deflection of first screw 11 and second screw 12, that occurs as they rotate, decreases. Thus, the wearing-out of flight tip 11a of first screw 11 and flight tip 12a of second screw 12 can be decreased.

In addition, according to the embodiment, since the wearing-out of flight tip 11a of first screw 11 and flight tip 12a of second screw 12 decreases, only screw supporting portion 15a and 15b that have worn out need to be replaced with new screw supporting portions when maintenance of twin screw extruder 1 is carried out. Thus, since the number of parts to be replaced for first screw 11 and second screw 12 is decreased, the maintenance cost will be reduced.

Moreover, in twin screw extruder 1 according to the embodiment, since wearing-out of first screw 11 and second screw 12 is prevented, first screw 11 and second screw 12 can adequately extrude resin material. Thus, resin material can be prevented from overflowing from vent 13b and thereby a lowering of productivity can be prevented.

According to the embodiment, first screw 11 and second screw 12 rotate in the same direction. Alternatively, first screw 11 and second screw 12 may rotate in the opposite directions. Like the effect of the embodiment, in this case, deflection that occurs in the screws can be reduced.

Even in the structure in which two screws that rotate do not come into contact with each other, resin material which is sandwiched between the two screws causes a force similar to the foregoing side forces. Thus, even in the structure in which two screws that rotate do not come into contact with each other or regardless of the size of the engagement of flight tips of two screws, the screw supporting portions according to the present invention can be preferably used. As a result, effects can be obtained in which deflection, that occur in the screws, is decreased and in which the flight tips are prevented from wearing-out.

### REFERENCE NUMERALS

- 1: Twin screw extruder
- 11: First screw
- 11a: Flight tip
- 12: Second screw
- 12a: Flight tip
- 13: Cylinder
- 15a: First screw supporting portion
- 15b: Second screw supporting portion
- 17a: First small diameter portion
- 17b: Second small diameter portion
- 25a: First supporting surface
- 25b: Second supporting surface
- 26c: Flow path
- Δ: Clearance

## Claims

1. A twin screw extruder (1) which has a first screw (11) and a second screw (12) that hold resin material therebetween and rotate, and which has a cylinder (13) in which said first screw (11) and said second screw (12) are located, said first screw (11) and said second screw (12) each having a small diameter portion (17a, 17b) having a diameter smaller than that of a flight tip (11a, 12a), an axial position of said small diameter portion (17a) of said first screw (11) being the same as that (17b) of said second screw (12), said twin screw extruder (1) comprising:
a screw supporting portion (45) which has a supporting surface (46a, 46b) that supports said small diameter portions (17a, 17b) of said first screw (11) and said second screw (12), and which has a flow path (26c) through which the resin material, which is transported by said first screw (11) and said second screws (12), passes,
wherein in the radial direction of said first screw (11) and said second screw (12), a clearance which is formed between said small diameter portion (17a, 17b) and said supporting surface (46a, 46b), is equal to or less than a clearance which is formed between said flight tip (11a, 12a) and an inner surface of said cylinder (13),
**characterized in that** said supporting surface (46a, 46b) of said screw supporting portion (15a, 15b) has a first supporting surface (46a) that supports said small diameter portion (17a) of said first screw (11) and a second supporting surface (46b) that supports said small diameter portion (17b) of said second screw (12), and **in that** said first supporting surface (46a) and said second supporting surface (46b) are formed symmetrically with respect to a vertical plane and are formed with an angle of a 120 degree angle composed of two equally inclined surfaces through a horizontal plane (47) that is sandwiched between the two equally inclined surfaces.

2. A twin screw extruder (1) which has a first screw (11) and a second screw (12) that hold resin material therebetween and rotate, and which has a cylinder (13) in which said first screw (11) and said second screw (12) are located, said first screw (11) and said second screw (12) each having a small diameter portion (17a, 17b) having a diameter smaller than that of a flight tip (11a, 12a), an axial position of said small diameter portion (17a) of said first screw (11) being the same as that (17b) of said second screw (12), said twin screw extruder (1) comprising:
a screw supporting portion (15a, 15b) which has a supporting surface (25a, 25b) that supports said small diameter portions (17a, 17b) of said first screw (11) and said second screw (12), and which has a flow path (25c) through which the resin material, which is transported by said first screw (11) and said second screws (12), passes,
wherein in the radial direction of said first screw (11) and said second screw (12), a clearance which is formed between said small diameter portion (17a, 17b) and said supporting surface (25a, 25b), is equal to or less than a clearance which is formed between said flight tip (11a, 12a) and an inner surface of said cylinder (13),
**characterized in that** said screw supporting portion (15a, 15b) has said first supporting surface (25a) and said second supporting surface (25b) that both support 1/2 of an entire periphery of each of said small diameter portions (17a, 17b), the first supporting surface (25a) being opposite to said second supporting surface (25b), and **in that** with respect to said first screw (11) and said second screw (12), the relationship of (L/D) > 0.68 is satisfied where L is the sum of the axial length of each of said small diameter portions (17a, 17b) and D is the inner diameter of said inner surface of said cylinder (13) opposite to said flight tips (11a, 12a).

3. A twin screw extruder (1) which has a first screw (11) and a second screw (12) that hold resin material therebetween and rotate, and which has a cylinder (13) in which said first screw (11) and said second screw (12) are located, said first screw (11) and said second screw (12) each having a small diameter portion (17a, 17b) having a diameter smaller than that of a flight tip (11a, 12a), an axial position of said small diameter portion (17a) of said first screw (11) being the same as that (17b) of said second screw (12), said twin screw extruder (1) comprising:
a screw supporting portion (28) which has a supporting surface (29a, 29b) that supports said small diameter portions (17a, 17b) of said first screw (11) and said second screw (12), and which has a flow path through which the resin material, which is transported by said first screw (11) and said second screws (12), passes,
wherein in the radial direction of said first screw (11) and said second screw (12), a clearance which is formed between said small diameter portion (17a, 17b) and said supporting surface (29a, 29b), is equal to or less than a clearance which is formed between said flight tip (11a, 12a) and an inner surface of said cylinder (13),
**characterized in that** said screw supporting portion (28) has said first supporting surface (29a) and said second supporting surface (29b) that both support 3/4 of an entire periphery of each of said small diameter portions (17a, 17b), and **in that** the relationship of (L/D) > 0.45 is satisfied where L is the sum of the axial length of each of said small diameter portions (17a, 17b) and D is the inner diameter of said inner surface of said cylinder (13) opposite to said flight tips (11a, 12a).

4. The twin screw extruder (1) according to any one of claims 1 to 3,
wherein said first screw (11) and said second screw (12) rotate in the same direction.

5. The twin screw extruder (1) according to any one of claims 1 to 3,
wherein said screw supporting portion (15a, 15b, **28, 45**) is located at a plurality of positions in the axial direction of said first screw (11) and said second screw (12).

6. The twin screw extruder (1) according to claim 1,
wherein said first screw (11) and said second screw (12) each have a kneading section (22) that plasticizes and kneads the resin material, said kneading section (22) being located partly in the axial direction of each of said first screw (11) and said second screw (12), and
wherein said screw supporting portion (15a, 15b, 28, 45) is located the downstream of said kneading section (22) with respect to the flow direction of the resin material.

7. The twin screw extruder (1) according to claim 1,
wherein said first supporting surface (25a, 29a, 46a) and said second supporting surface (25b, 29b, 46b) of said screw supporting portion (15a, 15b, 28, 45) are successively formed between said small diameter portion (17a) of said first screw (11) and said small diameter portion (17b) of said second screw (12).

8. The twin screw extruder (1) according to claim 1,
wherein said first supporting surface (25a, 29a, 46a) and said second supporting surface (25b, 29b, 46b) of said screw supporting portion (15a, 15b, 28, 45) are successively formed through a linear inner surface.

9. The twin screw extruder (1) according to claim 1,
wherein a groove (41) that allows the resin material to flow is formed on the outer peripheral surface of said small diameter portion (17a, 17b) of each of said first screw (11) and said second screw (12).

10. The twin screw extruder (1) according to claim 9,
wherein the longitudinal direction of said groove (41) is inclined in the axial direction of said first screw (11) and said second screw (12).

## Patentansprüche

1. Doppelschneckenextruder (1), der eine erste Schnecke (11) und eine zweite Schnecke (12) aufweist, die Harzmaterial dazwischen halten und sich drehen, und der einen Zylinder (13) aufweist, in dem sich die erste Schnecke (11) und die zweite Schnecke (12) befinden, wobei die erste Schnecke (11) und die zweite Schnecke (12) jeweils einen Teil mit kleinem Durchmesser (17a, 17b) aufweisen, der einen Durchmesser kleiner als der von einer Wendelspitze (11a, 12a) aufweist, wobei eine axiale Position des Teils mit kleinem Durchmesser (17a) der ersten Schnecke (11) die gleiche ist wie die (17b) von der zweiten Schnecke (12), wobei der Doppelschneckenextruder (1) Folgendes umfasst:
einen Schneckenstützteil (45), der eine Stützfläche (46a, 46b) aufweist, die die Teile mit kleinem Durchmesser (17a, 17b) der ersten Schnecke (11) und der zweiten Schnecke (12) stützt, und der einen Fließkanal (26c) aufweist, durch den das Harzmaterial, das durch die erste Schnecke (11) und die zweite Schnecke (12) transportiert wird, läuft,
wobei in der radialen Richtung der ersten Schnecke (11) und der zweiten Schnecke (12) ein Abstand, der zwischen dem Teil mit kleinem Durchmesser (17a, 17b) und der Stützfläche (46a, 46b) ausgebildet ist, gleich einem oder kleiner als ein Abstand ist, der zwischen der Wendelspitze (11a, 12a) und einer Innenfläche des Zylinders (13) ausgebildet ist,
**dadurch gekennzeichnet, dass**
die Stützfläche (46a, 46b) des Schneckenstützteils (15a, 15b) eine erste Stützfläche (46a), die den Teil mit kleinem Durchmesser (17a) der ersten Schnecke (11) stützt, und eine zweite Stützfläche (46b), die den Teil mit kleinem Durchmesser (17b) der zweiten Schnecke (12) stützt, aufweist, und
die erste Stützfläche (46a) und die zweite Stützfläche (46b) symmetrisch in Bezug auf eine vertikale Ebene ausgebildet sind und mit einem Winkel von 120 Grad ausgebildet sind, der aus zwei gleich geneigten Flächen durch eine horizontale Ebene (47), die zwischen den zwei gleich geneigten Flächen eingebettet ist, besteht.

2. Doppelschneckenextruder (1), der eine erste Schnecke (11) und eine zweite Schnecke (12) aufweist, die Harzmaterial dazwischen halten und sich drehen, und der einen Zylinder (13) aufweist, in dem sich die erste Schnecke (11) und die zweite Schnecke (12) befinden, wobei die erste Schnecke (11) und die zweite Schnecke (12) jeweils einen Teil mit kleinem Durchmesser (17a, 17b) aufweisen, der einen Durchmesser kleiner als der von einer Wendelspitze (11a, 12a) aufweist, wobei eine axiale Position des Teils mit kleinem Durchmesser (17a) der ersten Schnecke (11) die gleiche ist wie die (17b) von der zweiten Schnecke (12), wobei der Doppelschneckenextruder (1) Folgendes umfasst:
einen Schneckenstützteil (15a, 15b), der eine Stützfläche (25a, 25b) aufweist, die die Teile mit kleinem Durchmesser (17a, 17b) der ersten Schnecke (11) und der zweiten Schnecke (12) stützt, und der einen Fließkanal (25c) aufweist, durch den das Harzmaterial, das durch die erste Schnecke (11) und die zweite Schnecke (12) transportiert wird, läuft,
wobei in der radialen Richtung der ersten Schnecke (11) und der zweiten Schnecke (12) ein Abstand, der zwischen dem Teil mit kleinem Durchmesser (17a, 17b) und der Stützfläche (25a, 25b) ausgebildet ist, gleich einem oder kleiner als ein Abstand ist, der zwischen der Wendelspitze (11a, 12a) und einer Innenfläche des Zylinders (13) ausgebildet ist,
**dadurch gekennzeichnet, dass**
der Schneckenstützteil (15a, 15b) die erste Stützfläche (25a) und die zweite Stützfläche (25b) aufweist, die beide 1/2 eines gesamten Umfangs von jedem der Teile mit kleinem Durchmesser (17a, 17b) stützen, wobei die erste Stützfläche (25a) der zweiten Stützfläche (25b) gegenüberliegt, und
in Bezug auf die erste Schnecke (11) und die zweite Schnecke (12) die Beziehung von (L/D) > 0,68 erfüllt ist, wobei L die Summe der axialen Länge von jedem der Teile mit kleinem Durchmesser (17a, 17b) ist und D der Innendurchmesser der Innenfläche des Zylinders (13) gegenüber den Wendelspitzen (11a, 12a) ist.

3. Doppelschneckenextruder (1), der eine erste Schnecke (11) und eine zweite Schnecke (12) aufweist, die Harzmaterial dazwischen halten und sich drehen, und der einen Zylinder (13) aufweist, in dem sich die erste Schnecke (11) und die zweite Schnecke (12) befinden, wobei die erste Schnecke (11) und die zweite Schnecke (12) jeweils einen Teil mit kleinem Durchmesser (17a, 17b) aufweisen, der einen Durchmesser kleiner als der von einer Wendelspitze (11a, 12a) aufweist, wobei eine axiale Position des Teils mit kleinem Durchmesser (17a) der ersten Schnecke (11) die gleiche ist wie die (17b) von der zweiten Schnecke (12), wobei der Doppelschneckenextruder (1) Folgendes umfasst:
einen Schneckenstützteil (28), der eine Stützfläche (29a, 29b) aufweist, die die Teile mit kleinem Durchmesser (17a, 17b) der ersten Schnecke (11) und der zweiten Schnecke (12) stützt, und der einen Fließkanal aufweist, durch den das Harzmaterial, das durch die erste Schnecke (11) und die zweite Schnecke (12) transportiert wird, läuft,
wobei in der radialen Richtung der ersten Schnecke (11) und der zweiten Schnecke (12) ein Abstand, der zwischen dem Teil mit kleinem Durchmesser (17a, 17b) und der Stützfläche (29a, 29b) ausgebildet ist, gleich einem oder kleiner als ein Abstand ist, der zwischen der Wendelspitze (11a, 12a) und einer Innenfläche des Zylinders (13) ausgebildet ist,
**dadurch gekennzeichnet, dass**
der Schneckenstützteil (28) die erste Stützfläche (29a) und die zweite Stützfläche (29b) aufweist, die beide 3/4 eines gesamten Umfangs von jedem der Teile mit kleinem Durchmesser (17a, 17b) stützen, und
die Beziehung von (L/D) > 0,45 erfüllt ist, wobei L die Summe der axialen Länge von jedem der Teile mit kleinem Durchmesser (17a, 17b) ist und D der Innendurchmesser der Innenfläche des Zylinders (13) gegenüber den Wendelspitzen (11a, 12a) ist.

4. Doppelschneckenextruder (1) nach einem der Ansprüche 1 bis 3,
wobei sich die erste Schnecke (11) und die zweite Schnecke (12) in die gleiche Richtung drehen.

5. Doppelschneckenextruder (1) nach einem der Ansprüche 1 bis 3,
wobei sich der Schneckenstützteil (15a, 15b, **28, 45**) an einer Vielzahl von Positionen in der axialen Richtung der ersten Schnecke (11) und der zweiten Schnecke (12) befindet.

6. Doppelschneckenextruder (1) nach Anspruch 1,
wobei die erste Schnecke (11) und die zweite Schnecke (12) jeweils einen Knetabschnitt (22) aufweisen, der das Harzmaterial plastifiziert und knetet, wobei sich der Knetabschnitt (22) teilweise in der axialen Richtung von jeder von der ersten Schnecke (11) und der zweiten Schnecke (12) befindet, und
wobei sich der Schneckenstützteil (15a, 15b, 28, 45) nachgelagert zu dem Knetabschnitt (22) in Bezug auf die Fließrichtung des Harzmaterials befindet.

7. Doppelschneckenextruder (1) nach Anspruch 1,
wobei die erste Stützfläche (25a, 29a, 46a) und die zweite Stützfläche (25b, 29b, 46b) des Schneckenstützteils (15a, 15b, 28, 45) nacheinander zwischen dem Teil mit kleinem Durchmesser (17a) der ersten Schnecke (11) und dem Teil mit kleinem Durchmesser (17b) der zweiten Schnecke (12) ausgebildet sind.

8. Doppelschneckenextruder (1) nach Anspruch 1,
wobei die erste Stützfläche (25a, 29a, 46a) und die zweite Stützfläche (25b, 29b, 46b) des Schneckenstützteils (15a, 15b, 28, 45) nacheinander durch eine lineare Innenfläche ausgebildet sind.

9. Doppelschneckenextruder (1) nach Anspruch 1,
wobei eine Vertiefung (41), die es dem Harzmaterial ermöglicht, zu fließen, an der äußeren Umfangsfläche des Teils mit kleinem Durchmesser (17a, 17b) von jeder von der ersten Schnecke (11) und der zweiten Schnecke (12) ausgebildet ist.

10. Doppelschneckenextruder (1) nach Anspruch 9,
wobei die Längsrichtung der Vertiefung (41) in der axialen Richtung der ersten Schnecke (11) und der zweiten Schnecke (12) geneigt ist.

## Revendications

1. Extrudeuse à double vis (1) possédant une première vis (11) et une seconde vis (12) maintenant un matériau de résine entre elles et tournant, et possédant un cylindre (13) dans lequel ladite première vis (11) et ladite seconde vis (12) sont situées, ladite première vis (11) et ladite seconde vis (12) possédant chacune une partie de petit diamètre (17a, 17b) présentant un diamètre inférieur à celui d'une crête de pas (11a, 12a), une position axiale de ladite partie de petit diamètre (17a) de ladite première vis (11) étant la même que celle (17b) de ladite seconde vis (12), ladite extrudeuse à double vis (1) comprenant :
une partie de support de vis (45) possédant une surface de support (46a, 46b) qui supporte lesdites parties de petit diamètre (17a, 17b) de ladite première vis (11) et de ladite seconde vis (12), et possédant un chemin d'écoulement (26c) à travers lequel le matériau de résine, qui est transporté par ladite première vis (11) et ladite seconde vis (12), passe,
selon la direction radiale de ladite première vis (11) et de ladite seconde vis (12), un espace qui est formé entre ladite partie de petit diamètre (17a, 17b) et ladite surface de support (46a, 46b) étant inférieur ou égal à un espace formé entre ladite crête de pas (11a, 12a) et une surface interne dudit cylindre (13),
**caractérisée en ce que**
ladite surface de support (46a, 46b) de ladite partie de support de vis (15a, 15b) possède une première surface de support (46a) supportant ladite partie de petit diamètre (17a) de ladite première vis (11) et une seconde surface de support (46b) supportant ladite partie de petit diamètre (17b) de ladite seconde vis (12), et
**en ce que** ladite première surface de support (46a) et ladite seconde surface de support (46b) sont formées symétriquement par rapport à un plan vertical et sont formées avec un angle de 120 degrés constitué de deux surfaces inclinées de manière égale par rapport à un plan horizontal (47) qui est intercalé entre les deux surfaces inclinées de manière égale.

2. Extrudeuse à double vis (1) possédant une première vis (11) et une seconde vis (12) maintenant un matériau de résine entre elles et tournant, et possédant un cylindre (13) dans lequel ladite première vis (11) et ladite seconde vis (12) sont situées, ladite première vis (11) et ladite seconde vis (12) possédant chacune une partie de petit diamètre (17a, 17b) présentant un diamètre inférieur à celui d'une crête de pas (11a, 12a), une position axiale de ladite partie de petit diamètre (17a) de ladite première vis (11) étant la même que celle (17b) de ladite seconde vis (12), ladite extrudeuse à double vis (1) comprenant :
une partie de support de vis (15a, 15b) possédant une surface de support (25a, 25b) supportant les parties de petit diamètre (17a, 17b) de ladite première vis (11) et de ladite seconde vis (12), et possédant un chemin d'écoulement (25c) à travers lequel le matériau de résine, qui est transporté par ladite première vis (11) et ladite seconde vis (12), passe,
selon la direction radiale de ladite première vis (11) et de ladite seconde vis (12), un espace formé entre ladite partie de petit diamètre (17a, 17b) et ladite surface de support (25a, 25b), étant inférieur ou égal à un espace formé entre ladite crête de pas (11a, 12a) et une surface interne dudit cylindre (13),
**caractérisée en ce que**
ladite partie de support de vis (15a, 15b) possède ladite première surface de support (25a) et ladite seconde surface de support (25b) qui supportent, toutes les deux, la moitié de l'entière périphérie de chacune desdites parties de petit diamètre (17a, 17b), la première surface de support (25a) étant opposée à ladite seconde surface de support (25b), et
**en ce que** par rapport à ladite première vis (11) et à ladite seconde vis (12), la relation (L/D) > 0,68 est satisfaite où L est la somme de la longueur axiale de chacune desdites parties de petit diamètre (17a, 17b) et D est le diamètre interne de ladite surface interne dudit cylindre (13) opposée aux crêtes de pas (11a, 12a).

3. Extrudeuse à double vis (1) possédant une première vis (11) et une seconde vis (12) maintenant un matériau de résine entre elles et tournant, et possédant un cylindre (13) dans lequel ladite première vis (11) et ladite seconde vis (12) sont situées, ladite première vis (11) et ladite seconde vis (12) possédant chacune une partie de petit diamètre (17a, 17b) présentant un diamètre inférieur à celui d'une crête de pas (11a, 12a), une position axiale de ladite partie de petit diamètre (17a) de ladite première vis (11) étant la même que celle (17b) de ladite seconde vis (12), ladite extrudeuse à double vis (1) comprenant :
une partie de support de vis (28) possédant une surface de support (29a, 29b) supportant lesdites parties de petit diamètre (17a, 17b) de ladite première vis (11) et de ladite seconde vis (12) et possédant un chemin d'écoulement à travers lequel le matériau de résine, qui est transporté par ladite première vis (11) et ladite seconde vis (12), passe,
selon la direction radiale de ladite première vis (11) et de ladite seconde vis (12), un espace formé entre ladite partie de petit diamètre (17a, 17b) et ladite surface de support (29a, 29b), étant inférieur ou égal à un espace formé entre ladite crête de pas (11a, 12a) et une surface interne dudit cylindre (13),
**caractérisée en ce que**
ladite partie de support de vis (28) possède ladite première surface de support (29a) et ladite seconde surface de support (29b) qui supportent, toutes les deux, les 3/4 de l'entière périphérie de chacune desdites parties de petit diamètre (17a, 17b), et
**en ce que** la relation (L/D) > 0,45 est satisfaite où L est la somme de la longueur axiale de chacune desdites parties de petit diamètre (17a, 17b) et D est le diamètre interne de ladite surface interne dudit cylindre (13) opposée auxdites crêtes de pas (11a, 12a).

4. Extrudeuse à double vis (1) selon l'une quelconque des revendications 1 à 3,
ladite première vis (11) et ladite seconde vis (12) tournant dans le même sens.

5. Extrudeuse à double vis (1) selon l'une quelconque des revendications 1 à 3,
ladite partie de support de vis (15a, 15b, **28, 45**) étant située au niveau d'une pluralité de positions selon la direction axiale de ladite première vis (11) et de ladite seconde vis (12).

6. Extrudeuse à double vis (1) selon la revendication 1,
ladite première vis (11) et ladite seconde vis (12) possédant chacune une section de malaxage (22) qui plastifie et malaxe le matériau de résine, ladite section de malaxage (22) étant située en partie selon la direction axiale de chacune de ladite première vis (11) et de ladite seconde vis (12), et
ladite partie de support de vis (15a, 15b, 28, 45) étant située en aval de ladite section de malaxage (22) par rapport à la direction d'écoulement du matériau de résine.

7. Extrudeuse à double vis (1) selon la revendication 1,
ladite première surface de support (25a, 29a, 46a) et ladite seconde surface de support (25b, 29b, 46b) de ladite partie de support de vis (15a, 15b, 28, 45) étant successivement formées entre ladite partie de petit diamètre (17a) de ladite première vis (11) et ladite partie de petit diamètre (17b) de ladite seconde vis (12).

8. Extrudeuse à double vis (1) selon la revendication 1,
ladite première surface de support (25a, 29a, 46a) et ladite seconde surface de support (25b, 29b, 46b) de ladite partie de support de vis (15a, 15b, 28, 45) étant formées successivement à travers une surface interne linéaire.

9. Extrudeuse à double vis (1) selon la revendication 1,
une rainure (41) qui permet au matériau de résine de s'écouler étant formée sur la surface périphérique externe de ladite partie de petit diamètre (17a, 17b) de chacune de ladite première vis (11) et de ladite seconde vis (12).

10. Extrudeuse à double vis (1) selon la revendication 9,
ladite direction longitudinale de ladite rainure (41) étant inclinée selon la direction axiale de ladite première vis (11) et de ladite seconde vis (12).
